# EUROPEAN PATENT APPLICATION

(11) **EP 4 697 317 A1**
(43) Date of publication of application: **18.02.2026**
(21) Application number: 25187184.4
(22) Date of filing: 03.07.2025
(51) Int. Cl.: G09G 5/391, G09G 5/00, G06F 3/147

(54) **GROUPED DISPLAY COMPENSATIONS**

(30) Priority: 12.08.2024 US 202463682325 P; 19.12.2024 US 202418988577
(71) Applicant: Apple Inc., Cupertino, CA 95014 (US)
(72) Inventor: GUAN, Ximeng, Cupertino, 95014 (US); WAI, Dustin Y, Cupertino, 95014 (US); YEH, Yu-Ching, Cupertino, 95014 (US); ZHANG, Sheng, Cupertino, 95014 (US); HU, Jenny, Cupertino, 95014 (US); YUWEN, Yu, Cupertino, 95014 (US)
(74) Representative: Zacco Denmark A/S

(57) **Abstract**

An electronic device may include a display having a native domain. Images to be displayed may have a grouped domain, being foveated with groups having different resolutions based on a user's point of gaze and/or other characteristics. The images may be compensated in the grouped domain using one or more compensation circuits. For example, the foveated images may be compensated for horizontal cross talk, multi-line horizontal cross talk, and/or IR drops in the grouped domain. Alternatively or additionally, the display may include a frame buffer, and the images may be written into the frame buffer with intra-frame pauses. The intra-frame pauses may be initiated based on the foveation of a given image, or may be initiated in response to signals from the frame buffer that the frame buffer is full.

## Description

### Field

This relates generally to electronic devices, including electronic devices with displays.

### Background

Electronic devices often include displays that provide visual content to the viewers. A display can include an array of display pixels such as organic light-emitting diode display pixels or liquid crystal display pixels. Display driver circuitry coupled to the array of display pixels can control the operation of the array of display pixels.

### Summary

An aspect of the disclosure provides a display. The display may include an array of pixels configured to display images and display driver circuitry coupled to the array of pixels. The display driver circuitry is configured to foveate the images displayed by the array of pixels by adjusting a first resolution of a first group of pixels of the array of pixels and a second resolution of a second group of pixels of the array of pixels. The display may also include a compensation circuit configured to apply compensations to the foveated images based on the first resolution of the first group of pixels and the second resolution of the second group of pixels.

An aspect of the disclosure provides a method of displaying images using an array of pixels. The method may include generating a stream of image data that forms an image, foveating the image into a foveated space in which a first group of pixels of the array of pixels has a first resolution and a second group of pixels of the array of pixels has a second resolution, and applying compensations to the image in the foveated space based on the first resolution of the first group of pixels and the second resolution of the second group of pixels.

An aspect of the disclosure provides an electronic device. The electronic device may include a sensor and a display. The display may include an array of pixels configured to display images and display driver circuitry coupled to the array of pixels. The display driver circuitry may be configured to foveate the images displayed by the array of pixels into a foveated space based on measurements from the sensor. The display may further include a compensation circuit configured to apply compensations to the images in the foveated space.

### Brief Description of the Drawings

FIG. 1 is a schematic diagram of an illustrative electronic device having a display in accordance with some embodiments.
FIG. 2 is a top view of an illustrative display that provides images to a viewer in accordance with some embodiments.
FIG. 3 is a front view of an illustrative image with foveated, grouped regions in accordance with some embodiments.
FIGS. 4A and 4B are diagrams of an illustrative open loop intra-frame pause (IFP) in accordance with some embodiments.
FIG. 5 is a diagram of an illustrative closed loop IFP in accordance with some embodiments.
FIG. 6 is an illustrative timing diagram of grouped image data read outs that use IFPs in accordance with some embodiments.
FIG. 7 is a diagram of illustrative a horizontal cross talk artifact in an image in accordance with some embodiments.
FIG. 8 is a diagram of an illustrative horizontal cross talk compensation circuit for grouped image data in accordance with some embodiments.
FIG. 9 is a diagram of illustrative a multi-line horizontal cross talk artifact in an image in accordance with some embodiments.
FIGS. 10A and 10B are illustrative timing diagrams of multi-line horizontal cross talk in an image displayed on a display with grouped scanning accordance with some embodiments.
FIG. 11 is an illustrative timing diagram of multi-line horizontal cross talk in an image displayed on a display with native scanning accordance with some embodiments.
FIG. 12 is a diagram of an illustrative multi-line horizontal cross talk compensation circuit for grouped image data in accordance with some embodiments.
FIG. 13 is a diagram of illustrative an IR drop artifact in an image in accordance with some embodiments.
FIG. 14 is a diagram of an illustrative circuit that may be used for IR drop compensations in accordance with some embodiments.
FIG. 15 is a diagram of an illustrative IR drop compensation circuit in accordance with some embodiments.
FIG. 16 is a flowchart of illustrative method steps for compensating a foveated image in the grouped space in accordance with some embodiments.

### Detailed Description

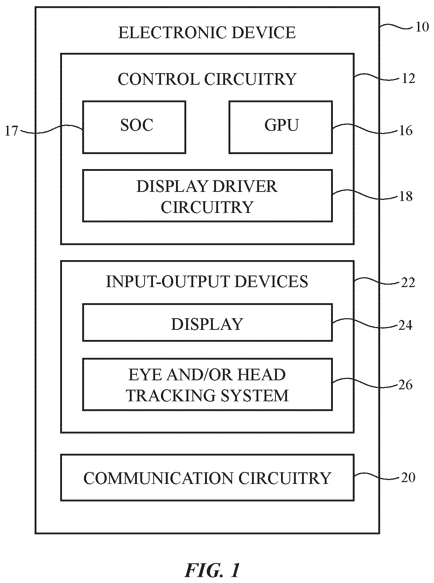

An illustrative electronic device of the type that may be provided with a display is shown in FIG. 1. Electronic device 10 may be a computing device such as a laptop computer, a computer monitor containing an embedded computer, a tablet computer, a cellular telephone, a media player, or other handheld or portable electronic device, a smaller device such as a wrist-watch device, a pendant device, a headphone or earpiece device, an augmented reality (AR) headset and/or virtual reality (VR) headset, a device embedded in eyeglasses or other equipment worn on a user's head, or other wearable or miniature device, a display, a computer display that contains an embedded computer, a computer display that does not contain an embedded computer, a gaming device, a navigation device, an embedded system such as a system in which electronic equipment with a display is mounted in a kiosk or automobile, or other electronic equipment.

As shown in FIG. 1, electronic device 10 may have control circuitry 12. Control circuitry 12 may be configured to perform operations in electronic device 10 using hardware (e.g., dedicated hardware or circuitry), firmware and/or software. Software code for performing operations in electronic device 10 and other data is stored on non-transitory computer-readable storage media (e.g., tangible computer-readable storage media) in control circuitry 12. The software code may sometimes be referred to as software, data, program instructions, instructions, or code. The non-transitory computer readable storage media (sometimes referred to generally as memory) may include non-volatile memory such as non-volatile random-access memory (NVRAM), one or more hard drives (e.g., magnetic drives and/or solid-state drives), one or more removable flash drives or other removable media, or the like. Memory may also include volatile memory such as random-access memory (e.g., dynamic random-access memory and/or static random-access memory). Software stored on the non-transitory computer readable storage media may be executed on the processing circuitry of control circuitry 12. The processing circuitry may include application-specific integrated circuits with processing circuitry, one or more microprocessors, digital signal processors, graphics processing units, a central processing unit (CPU), or other processing circuitry.

In the example of FIG. 1, control circuitry 12 may include system circuitry 17 (sometimes referred to as system-on-chip (SoC) 17) that integrates one or more microprocessors, multi-core processors, microcontrollers, application-specific integrated circuits, and/or other types of processing circuitry for control circuitry 12. Control circuitry 12 may also include one or more graphics processing units (GPUs) 16 and display driver circuitry 18. Display driver circuitry 18 may include one or more integrated circuits (e.g., display driver integrated circuits) that implement thin-film transistor driving circuits, data programming or loading circuits, timing controller(s), and/or other suitable circuitry for operating display components such as display pixels in a display.

To support communications between device 10 and external equipment, control circuitry 12 may communicate using communication circuitry 20. Communication circuitry 20 may include antennas, radio-frequency transceiver circuitry, radios, and other wireless communication circuitry and/or wired communication circuitry. In some illustrative configurations, portions of communication circuitry 20 (e.g., radios or baseband processors) may be implemented or included as part of the processing circuitry of control circuitry 12.

Communication circuitry 20 may support unidirectional and/or bidirectional wireless communication between device 10 and external equipment over one or more wireless links. As examples, communication circuitry 20 may include wireless communication circuitry that supports communication over wireless personal area network link(s) (e.g., a Bluetooth^{®} link), that supports communication over wireless local area network link(s) (e.g., a WiFi^{®} link), supports communication over a near-field communication link, supports communication over a cellular network link (e.g., a 60 GHz link or other millimeter wave link and/or other cellular network links using other radio-frequency bands), and/or supports communications over any other suitable wired or wireless communications link.

Device 10 may, if desired, include power circuits for transmitting and/or receiving wired and/or wireless power and may include batteries or other energy storage devices. For example, device 10 may include a coil and rectifier circuitry that uses the coil to receive wireless power provided to components (e.g., energy storage devices, control circuitry 12, etc.) in device 10.

Input-output devices in device 10, such as input-output devices 22, may be used to receive input (e.g., captured images, user voice or other sound input, user haptic or other force input, etc.) supplied to device 10 and/or to provide output (e.g., visual content such as images and/or videos, sound, haptic output, etc.) from device 10 to the external environment (e.g., to users of device 10 and/or external equipment). In particular, a user can control the operation of device 10 by supplying commands through input-output devices 22 and may receive status information and other output from device 10 using input-output devices 22. As examples, input-output devices 22 may include buttons, joysticks, scrolling wheels, touch pads, key pads, keyboards, microphones, speakers, tone generators, vibrators, cameras, sensors, light-emitting diodes and other status indicators, data ports, and/or other electrical components.

Additionally, input-output devices 22 may include one or more displays such as display 24. Display 24 may be a touch screen display that includes a touch sensor for gathering touch input from a user or display 24 may be insensitive to touch. A touch sensor for display 24 may be based on an array of capacitive touch sensor electrodes, acoustic touch sensor structures, resistive touch components, force-based touch sensor structures, a light-based touch sensor, and/or other suitable touch sensor arrangements.

Display 24 may be an organic light-emitting diode display, a liquid crystal display, an electrophoretic display, an electrowetting display, a plasma display, a microelectromechanical systems display, a display having a pixel array formed from crystalline semiconductor light-emitting diode dies (sometimes referred to as microLEDs), and/or a display based on another desirable display technology. Configurations in which display 24 is an organic light-emitting diode display are sometimes described herein as an example.

Display 24 may have a rectangular shape (i.e., display 24 may have a rectangular footprint and a rectangular peripheral edge that runs around the rectangular footprint) or may have other suitable shapes. Display 24 may be planar or may have a curved profile.

Some types of electronic devices 10 may include two displays 24. In one possible arrangement, a first display 24 may be positioned on one side of device 10 and a second display 24 may be positioned on a second, opposing side of device 10. First and second displays 24 therefore may have a back-to-back arrangement, thereby providing visual content in opposite directions (e.g., to different users). One or both of displays 24 may be curved. Alternatively or additionally, in another possible arrangement such as in head-mounted devices, device 10 may include a first display 24 that displays images for a first eye of a user and a second display 24 that displays images for a second eye of a user.

Sensors in input-output devices 22 may include force sensors (e.g., strain gauges, capacitive force sensors, resistive force sensors, etc.), audio sensors such as microphones, touch and/or proximity sensors such as capacitive sensors (e.g., a two-dimensional capacitive touch sensor integrated into display 24, a two-dimensional capacitive touch sensor overlapping display 24, and/or a touch sensor that forms a button, trackpad, or other input device not associated with a display), and other sensors. If desired, sensors in input-output devices 22 may include optical sensors such as optical sensors that emit and detect light, ultrasonic sensors, optical touch sensors, optical proximity sensors, and/or other touch sensors and/or proximity sensors, monochromatic and color ambient light sensors, image sensors, fingerprint sensors, temperature sensors, sensors for measuring three-dimensional non-contact gestures ("air gestures"), pressure sensors, sensors for detecting position, orientation, and/or motion (e.g., accelerometers, magnetic sensors such as compass sensors, gyroscopes, and/or inertial measurement units that contain some or all of these sensors), health sensors, radio-frequency sensors, depth sensors (e.g., structured light sensors and/or depth sensors based on stereo imaging devices), optical sensors such as self-mixing sensors and light detection and ranging (lidar) sensors that gather time-of-flight measurements, humidity sensors, moisture sensors, gaze tracking sensors, and/or other sensors.

Device 10 may include cameras and other components that form part of gaze and/or head tracking system 26. The camera(s) or other components of system 26 may face an expected location of a viewer and may track the viewer's eyes and/or head (e.g., images and other information captured by system 26 may be analyzed by control circuitry 12 to determine the location of the viewer's eyes (e.g., a point of gaze of the user) and/or head). This head-location information obtained by system 26 may be used to determine the appropriate direction with which display content from display 24 should be directed. Eye and/or head tracking system 26 may include any desired number and combination of infrared and/or visible light detectors. Eye and/or head tracking system 26 may optionally include light emitters to illuminate the scene.

In operation, circuitry 12 may be used to run software on device 10 such as operating system code and applications. During operation of device 10, the software running on control circuitry 12 may display images on display 24 using an array of pixels in display 24. During some operations, the images displayed on display 24 may be adjusted based on input to input-output devices 22. For example, the images displayed on display 24 may be foveated based on measurements by eye tracking system 26, such as based on the user's point of gaze.

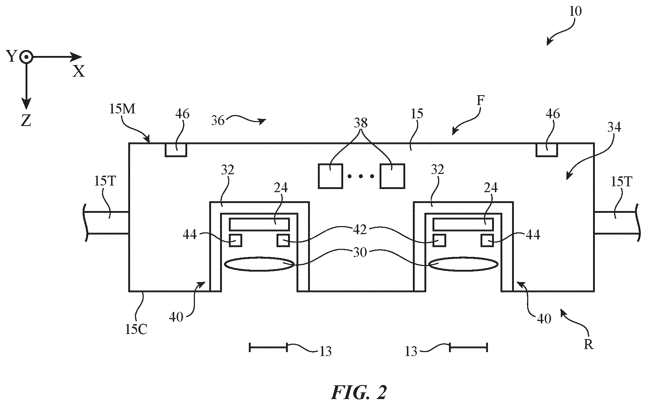

A top view of an illustrative head-mounted device is shown in FIG. 2. As shown in FIG. 2, a head-mounted device such as electronic device 10 may have head-mounted support structures such as housing 15. Housing 15 may include portions (e.g., head-mounted support structures 15T) to allow device 10 to be worn on a user's head. Support structures 15T may be formed from fabric, polymer, metal, and/or other material. Support structures 15T may form a strap or other head-mounted support structures to help support device 10 on a user's head. A main support structure (e.g., a head-mounted housing such as main housing portion 15M) of housing 15 may support electronic components such as displays 24.

Main housing portion 15M may include housing structures formed from metal, polymer, glass, ceramic, and/or other material. For example, housing portion 15M may have housing walls on front face F and housing walls on adjacent top, bottom, left, and right side faces that are formed from rigid polymer or other rigid support structures, and these rigid walls may optionally be covered with electrical components, fabric, leather, or other soft materials, etc. Housing portion 15M may also have internal support structures such as a frame (chassis) and/or structures that perform multiple functions such as controlling airflow and dissipating heat while providing structural support. The walls of housing portion 15M may enclose internal components 38 in interior region 34 of device 10 and may separate interior region 34 from the environment surrounding device 10 (exterior region 36). Internal components 38 may include integrated circuits, actuators, batteries, sensors (e.g., input-output devices 22 of FIG. 1), and/or other circuits and structures for device 10. Housing 15 may be configured to be worn on a head of a user and may form glasses, spectacles, a hat, a mask, a helmet, goggles, and/or other head-mounted device. Configurations in which housing 15 forms goggles may sometimes be described herein as an example.

Front face F of housing 15 may face outwardly away from a user's head and face. Opposing rear face R of housing 15 may face the user. Portions of housing 15 (e.g., portions of main housing 15M) on rear face R may form a cover such as cover 15C (sometimes referred to as a curtain). The presence of cover 15C on rear face R may help hide internal housing structures, internal components 38, and/or other structures in interior region 34 from view by a user.

Device 10 may have one or more cameras such as cameras 46 of FIG. 2. Cameras 46 that are mounted on front face F and that face outwardly (towards the front of device 10 and away from the user) may sometimes be referred to herein as forward-facing or front-facing cameras. Cameras 46 may capture visual odometry information, image information that is processed to locate objects in the user's field of view (e.g., so that virtual content can be registered appropriately relative to real-world objects), image content that is displayed in real time for a user of device 10, and/or other suitable image data. For example, forward-facing (front-facing) cameras 46 may allow device 10 to monitor movement of the device 10 relative to the environment surrounding device 10 (e.g., the cameras may be used in forming a visual odometry system or part of a visual inertial odometry system). Forward-facing cameras 46 may also be used to capture images of the environment that are displayed to a user of the device 10. If desired, images from multiple forward-facing cameras may be merged with each other and/or forward-facing camera content can be merged with computer-generated content for a user.

Device 10 may have any suitable number of cameras 46. For example, device 10 may have at least one, at least two, at least four, at least six, at least eight, at least ten, at least 12, less than 20, less than 14, less than 12, less than 10, 4-10, or other desired number of cameras 46. Cameras 46 may be sensitive at infrared wavelengths (e.g., cameras 46 may be infrared cameras), may be sensitive at visible wavelengths (e.g., cameras 46 may be visible cameras), and/or cameras 46 may be sensitive at other wavelengths. If desired, cameras 46 may be sensitive at both visible and infrared wavelengths.

Device 10 may have left and right optical modules 40. Optical modules 40 may support electrical and optical components such as light-emitting components and lenses and may therefore sometimes be referred to as optical assemblies, optical systems, optical component support structures, lens and display support structures, electrical component support structures, or housing structures. Each optical module may include a respective display 24, lens 30, and support structure such as support structure 32. Support structure 32, which may sometimes be referred to as a lens support structure, optical component support structure, optical module support structure, or optical module portion, or lens barrel, may include hollow cylindrical structures with open ends or other supporting structures to house displays 24 and lenses 30. Support structures 32 may, for example, include a left lens barrel that supports a left display 24 and left lens 30 and a right lens barrel that supports a right display 24 and right lens 30.

Displays 24 may include arrays of pixels or other display devices to produce images. Displays 24 may, for example, include organic light-emitting diode pixels formed on substrates with thin-film circuitry and/or formed on semiconductor substrates, pixels formed from crystalline semiconductor dies, liquid crystal display pixels, scanning display devices, and/or other display devices for producing images.

Lenses 30 may include one or more lens elements for providing image light from displays 24 to respective eyes boxes 13. Lenses may be implemented using refractive glass lens elements (or lens elements of another suitable material, such as polycarbonate), using mirror lens structures (catadioptric lenses), using Fresnel lenses, using holographic lenses, and/or using other lens systems.

When a user's eyes are located in eye boxes 13, displays (display panels) 24 may operate together to form a display for device 10 (e.g., the images provided by respective left and right optical modules 40 may be viewed by the user's eyes in eye boxes 13 so that a stereoscopic image is created for the user). The left image from the left optical module fuses with the right image from a right optical module while the display is viewed by the user.

It may be desirable to monitor the user's eyes while the user's eyes are located in eye boxes 13. For example, it may be desirable to use a camera to capture images of the user's pupils, irises, or other portions of the user's eyes for user authentication. It may also be desirable to monitor the direction of the user's gaze. Gaze tracking information may be used as a form of user input and/or may be used to determine where, within an image, image content resolution should be locally enhanced in a foveated imaging system. Information regarding the location of a user's pupil(s) may be used in computing compensation functions for image frames displayed by displays 24. To ensure that device 10 can capture satisfactory eye images while a user's eyes are located in eye boxes 13, each optical module 40 may be provided with one or more cameras such as camera 42 and one or more light sources such as light-emitting diodes 44 or other light-emitting devices such as lasers, lamps, etc. Camera 42 and light-emitting diodes 44 may form a portion of eye and/or head tracking system 26 (FIG. 1). Cameras 42 and light-emitting diodes 44 may operate at any suitable wavelengths (visible, infrared, and/or ultraviolet). As an example, diodes 44 may emit infrared light that is invisible (or nearly invisible) to the user. This allows eye monitoring operations to be performed continuously without interfering with the user's ability to view images on displays 24.

In operation, light-emitting diodes 44 may emit light that reflects off of a user's eyes and/or creates glints on the user's eyes. Cameras 42 may measure light that has reflected off of the user's eyes and/or detect the glints to determine a user's gaze (e.g., a user's point of gaze). Although FIG. 2 shows cameras 42 and light-emitting diodes 44 , this is merely illustrative. In general, a gaze tracking system in device 10 (e.g., system 26 of FIG. 1) may include any suitable light source(s) and any suitable light sensor(s).

Although FIG. 2 has shown device 10 as including two displays 24, this is merely illustrative. In general, device 10 may include any desired number of displays, such as one display that is viewed by both eyes. Additionally, although FIG. 2 depicts device 10 as a head-mounted device, device 10 may generally be any desired device, such as a computing device such as a laptop computer, a computer monitor containing an embedded computer, a tablet computer, a cellular telephone, a media player, or other handheld or portable electronic device, a smaller device such as a wrist-watch device, a pendant device, a headphone or earpiece device, a device embedded in eyeglasses or other equipment worn on a user's head, or other wearable or miniature device, a display, a computer display that contains an embedded computer, a computer display that does not contain an embedded computer, a gaming device, a navigation device, a head-mounted device, an embedded system such as a system in which electronic equipment with a display is mounted in a kiosk or automobile, or other electronic equipment.

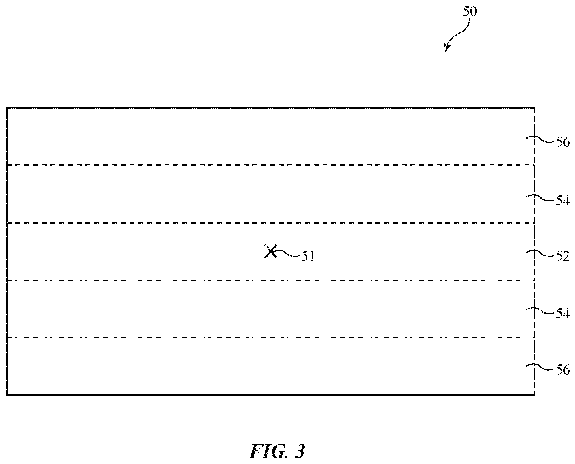

In some embodiments, the images shown on display(s) 24 may be dynamically foveated based on an area of interest, such as a location of the user's gaze (e.g., the user's point of gaze). An illustrative example is shown in FIG. 3.

As shown in FIG. 3, a user may have a point of gaze 51 (as determined by a gaze tracker in device 10, such as a gaze tracker in eye and/or head tracking system 26 of FIG. 1) in image 50 that is displayed by one or more displays, such as displays 24 of FIG. 2. Image 50 may be dynamically foveated (also referred to as warped or grouped herein) based on point of gaze 51. For example, group 52 of pixels in image 50 may be rendered in full resolution, groups 54 of pixels in image 50 may be rendered in half resolution (e.g., every two pixels in groups 54 may have the same output), and groups 56 of pixels in image 50 may be rendered in quarter resolution (e.g., every four pixels in groups 56 may have the same output). However, this foveation is merely illustrative. In general, image 50 may be foveated in any suitable manner based on point of gaze 51.

The foveation of image 50 into groups of pixels may allow for faster processing and/or lower computational and storage requirements. In general, image 50 may be dynamically foveated to optimize resolution and/or quality in one or more regions of interest, which may be determined based on the point of gaze of the user (e.g., point of gaze 51) and/or other suitable characteristics (e.g., the content to be displayed in image 50).

Although FIG. 3 shows image 50 with vertical foveation in groups that extend horizontally across image 50, this is merely illustrative. In general, image 50 may be vertically foveated and/or horizontally foveated (e.g., in groups that extend vertically across image 50).

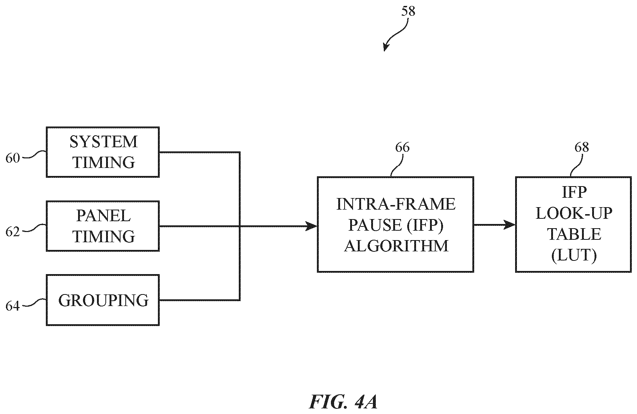

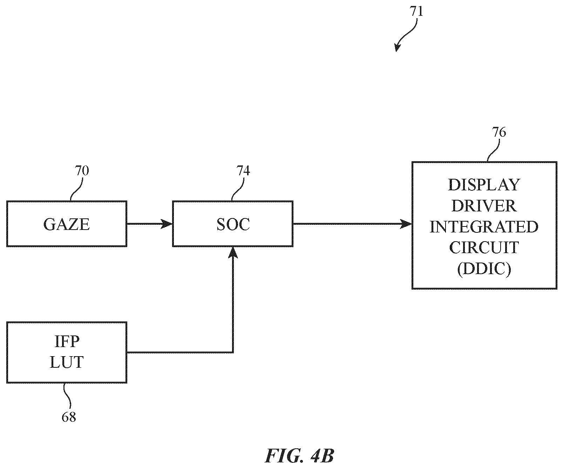

Regardless of the foveation of image 50, the foveation of image 50 into groups with different resolutions may result in large buffer requirements. In particular, rows in group 52 may be read out at the same (or similar) speeds as they are written into a frame buffer. However, rows in groups 54 and 56 may be read out at slower speeds as they are written into the frame buffer (e.g., because each read out row in foveated space corresponds to two or four rows in the native space). Therefore, it may be desirable to read out the rows of image 50 with intra-frame pauses to ensure that the frame buffer does not become overloaded. An illustrative example is shown in FIGS. 4A and 4B.

As shown in FIG. 4A, schematic diagram 58 may be used to implement an intra-frame pause (IFP) when writing an image, such as image 50 into a buffer of device 10 (e.g., in a portion of control circuitry 12 of FIG. 1). In particular, look-up table (LUT) 68 may be generated in an offline LUT generation. Known information regarding system timing 60, panel timing 62, and grouping 64 may be used in IFP algorithm 66 to produce LUT 68. System timing 60 may include information regarding the timing of an entirety of device 10 or a subset of device 10 including control circuitry (e.g., control circuitry 12 of FIG. 1), display driver circuitry (e.g., display driver circuitry 18 of FIG. 1), and/or other circuitry involved with the display. Panel timing 62 may include information regarding the operation of the pixels in the display and the speed of components associated with the display. Grouping 64 may relate to the pixel grouping when an image to be displayed in foveated, an example of which is shown in FIG. 3.

IFP algorithm 66 may generate IFP LUT 68, which may have IFP information for each gaze location (e.g., point of gaze 51 in FIG. 3) in image 50. For example, IFP LUT 68 may include IFP information for ranges of points of gaze and/or individual points of gaze within the image. The IFP information in IFP LUT 68 may include information on the duration and timing of intra-frame pauses used when writing the image data into the frame buffer. In particular, given a point of gaze 51, IFP LUT 68 may indicate when intra-frame pauses should be initiated and how long they should last as the image data is written into the buffer. In some embodiments, IFP LUT 68 may include IFP information for all gaze locations and grouping scenarios for associated images and displays in electronic device 10.

During operation of device 10, illustrative flowchart 71 of FIG. 4B may be used. In particular, gaze 70 and IFP LUT 68 may be provided to system-on-chip (SoC) 74. Gaze 70 may include a user's point of gaze (e.g., point of gaze 51 in FIG. 3). SoC 74 may be associated with display 24 and may correspond with SoC 17 of FIG. 1, if desired. Based on gaze 70 and the corresponding IFP information in IFP LUT 68, SoC 74 may read out image 50 to display driver integrated circuit (DDIC) 76, which may correspond with display driver circuitry 18 of FIG. 1. The read out will include the groups of pixels in image 50, separated by IFPs.

In particular, rows of image 50 may be written into a partial frame buffer in DDIC 76. The partial frame buffer may store the rows, which may in turn be read out from the buffer. Because image 50 is grouped (e.g., as shown in FIG. 3), some of the rows will include pixel information for multiple rows of the display panel in its native resolution. These rows will take longer to read out to the display panel. Therefore, reading out image 50 to the buffer with IFPs will ensure that the buffer does not overflow.

Although FIG. 4A shows IFP LUT 68 being generated using IFP algorithm 66, this is merely illustrative. In some embodiments, IFP algorithm 66 may be used to compute the IFP information directly for SoC 74. In other words, IFP algorithm 66 may be substituted for IFP LUT 68 in flowchart 71 of FIG. 4B, and IFP algorithm 66 may be used to calculate the IFP duration and timing based on the user's gaze for each image frame.

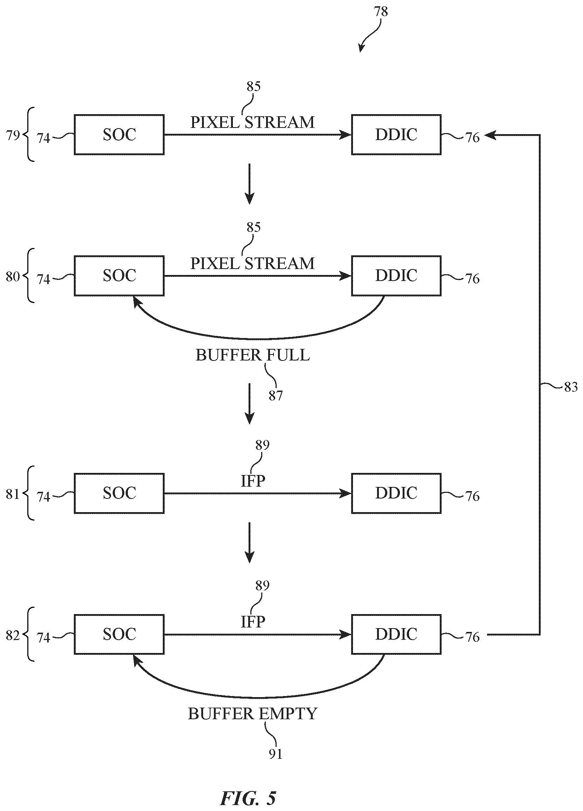

The example of FIGS. 4A and 4B is open loop without any feedback regarding the state of the partial frame buffer in DDIC 76. However, this is merely illustrative. In some embodiments, a closed loop may be used to determine IFPs when reading out image data to the partial frame buffer. An illustrative example is shown in FIG. 5.

As shown in FIG. 5, closed loop 78 may be formed between SoC 74 and DDIC 76. In particular, at step 79, SoC 74 may write image data 85 (e.g., a pixel stream of rows of image 50) to the partial frame buffer of DDIC 76.

When the partial frame buffer is full (or nearly full), at step 80, DDIC 76 may communicate the buffer full status 87 of the partial frame buffer to SoC 74.

At step 81, SoC 74 may pause writing the image data, as shown by IFP 89 between SoC 74 and DDIC 76.

At step 82, when DDIC 76 has read out enough image data from the partial frame buffer and the partial frame buffer is empty (or nearly empty), DDIC 76 may communicate the buffer empty status 91 of the partial frame buffer to SoC 74 (e.g., that there is available storage in the frame buffer). The process may then proceed along line 83, and SoC 74 may resume writing image data to the partial buffer in DDIC 76. In this way, a closed loop may be used to control the writing of image data from SoC 74 to DDIC 76.

Although FIG. 5 shows DDIC 76 sending buffer full status 87 to SoC 74 in step 80 and DDIC 76 sending buffer empty status 91 to SoC 74 in step 82, this is merely illustrative. In general, DDIC 76 may communicate that there is sufficient space in the partial frame buffer to accommodate additional image data from SoC 74. For example, any suitable threshold storage space in the partial frame buffer may be used, and DDIC 76 may communicate the status to SoC 74 when the storage space in the partial frame buffer is below (or above) the threshold.

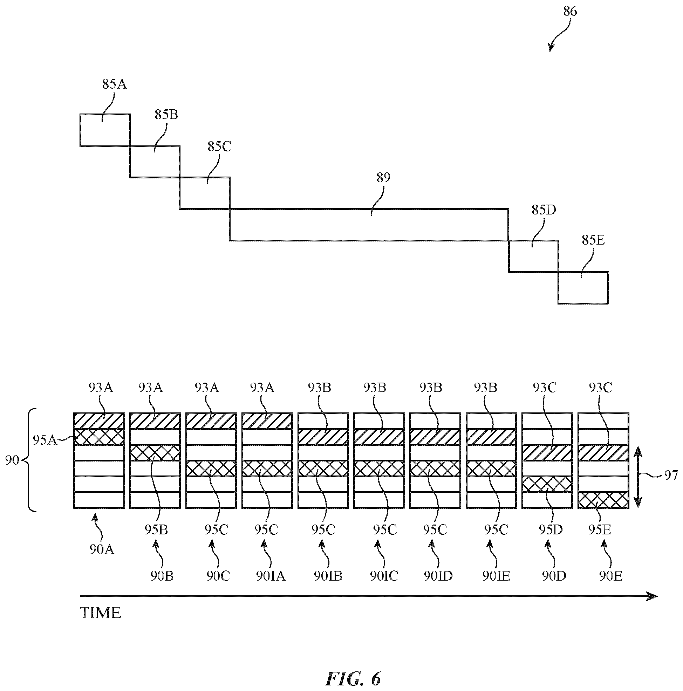

An illustrative diagram of the buffer requirements needed when an IFP is used is shown in FIG. 6. As shown in diagram 86, image data 85, which may include rows 85A, 85B, 85C, 85D, and 85E, may be written into buffer 90 over time. IFP 89 may be present between rows 85C and 85D as an illustrative example.

At time 90A, row 85A may be written into buffer 90 at position 95A. At time 90B, row 85B may be written into buffer 90 at position 95B. At time 90C, row 85C may be written into buffer 90 at position 95C. As indicated at time 90C, row 85C may be written over halfway through buffer 90, while the row stored in position 93A has not yet been read out from buffer 90. Therefore, IFP 89 may be used to pause writing additional rows of the image data while the buffer is read out.

In particular, at time 90IA, no new image data may be written into buffer 90, so the data at position 93A and 95C may remain in place. At time 90IB, the image data stored in position 93A may be read out (e.g., to the display circuitry). In this way, the gap between the current read out position of buffer 90 (position 93B) and the current write position of buffer 90 (position 95C) may be reduced.

IFP 89 may remain paused during times 90IC, 90ID, and 90IE, until the image data stored in position 93B is read out and row 85D is written into buffer 90 in position 95D. At time 90E, row 85E may be written into buffer 90 in position 95E.

By incorporating IFP 89, which may be used one or more times in a single image read out, the size of buffer may be reduced, as indicated by buffer size 97. In general, the IFPs used may be used to match the write speed into the buffer to the read speed out of the buffer (e.g., through IFP algorithm 66 (e.g., based on the foveation of the image) or closed loop 78 of FIGS. 4 and 5). In this way, a smaller buffer may be required.

In some embodiments, it may be desirable to apply one or more compensations to an image after the image is foveated (e.g., when the image is in the foveated/grouped space) instead of, or in addition to, reading out the image with intra-frame pauses. For example, a foveated image may be compensated for horizontal cross talk, multi-line horizontal cross talk, IR drop, and/or other characteristics. Applying compensations in the foveated space may reduce power requirements for the associated electronic device.

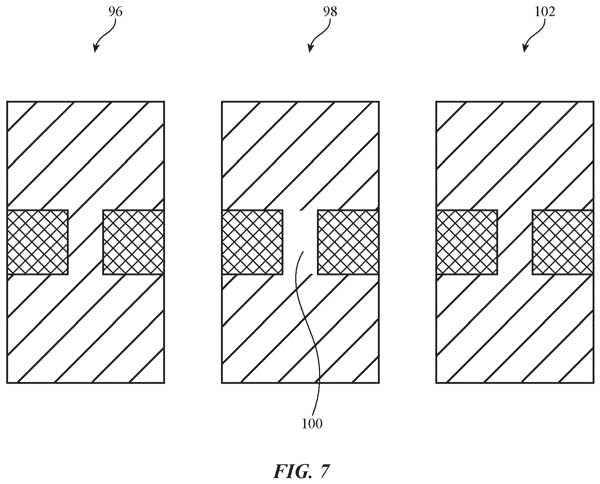

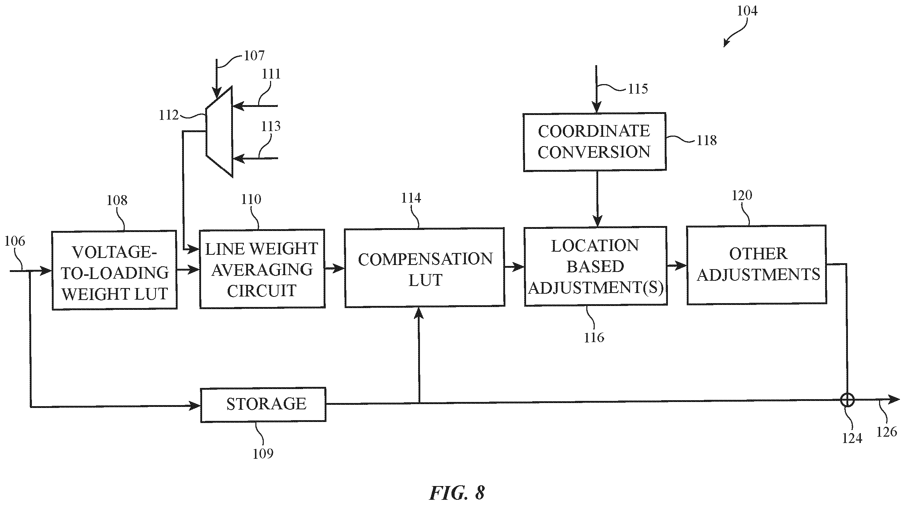

An illustrative example of applying a compensation for horizontal cross talk is shown in FIG. 7. In particular, one or more horizontal cross talk (HXT) artifacts 100 may be present in image 98 relative to source content 96 (e.g., the source of the image to displayed on display 24). Horizontal cross talk artifacts 100 may be caused by adjacent pixels in a display when there are adjacent dark and light regions (as shown in FIG. 7). However, this horizontal cross talk may be compensated for to provide a final image 102 that corresponds to source content 96 (e.g., without horizontal cross talk artifacts). An illustrative example of a compensation circuit that may be used to compensate for the horizontal cross talk is shown in FIG. 8.

As shown in FIG. 8, horizontal cross talk compensation circuit 104 may include voltage-to-loading weight LUT 108, which may receive pixel stream 106 (also referred to as pixel values 106 herein). Pixel stream 106 may correspond with the image data after it has been foveated.

Voltage-to-loading weight LUT 108 may translate the gray levels of pixels in pixel stream 106 to a given weight based on the load effect that those gray levels will have on horizontal gate lines of the display. In parallel, storage 109 may store the values of pixel stream 106. Line weight averaging circuit 110 may receive the weights from LUT 108, as well as information regarding the grouping of the image data from multiplexer (MUX) 112. In particular, MUX 112 may take as inputs whether grouping is being used (e.g., whether pixel stream 106 is foveated) and the grouping factor (e.g., 1x, 2x, or 4x for a given row or column, see FIG. 3) and may output the grouping information to line weight averaging circuit 110.

Line weight averaging circuit 110 may average the loading on each gate line based on the load weights from LUT 108 and the grouping information received from MUX 112. For example, if the pixels are grouped (e.g., in a group of 2 or 4), line weight averaging circuit 110 will determine that the pixels will have a larger impact on the gate line and increase the weight value for that row. Therefore, line weight averaging circuit 110 and MUX 112 may collectively be referred to as resolution-determination circuitry herein. In other words, line weight averaging circuit 110 and MUX 112 may determine the resolution of given pixel groupings when the image is in the foveated/grouped domain and adjust the loading on each gate line based on the resolution.

Compensation LUT 114 may receive the weighting average from circuit 110 and the pixel values from storage 109. Compensation LUT 114 may include compensations for each pixel value based on the weighting average from circuit 110.

Location-based adjustment block 116 may receive the compensations from LUT 114, along with information regarding the position of the pixels in the native, unfoveated space of the display. In particular, block 116 may determine a position of the grouped pixels (e.g., an x-y location) in the native space of the display using coordinate conversion circuitry 118 (which may determine a coordinate conversion based on grouped coordinates 115 received from circuitry in the display) and may correct the compensation from LUT 114 based on that position. For example, different lines of image data may have different numbers of pixels (e.g., due to chamfered corners of a display), which may result in different load amounts for some lines than others.

Adjustment block 120 may receive the position-corrected compensation from block 116 and may apply any suitable scalings, offsets, and/or other adjustments to the compensation.

The adjusted compensations from block 120 may then be applied to the original pixel values received from storage 109, as indicated by junction 124. The compensated pixel values may then be output as output 126. In this way, pixel values 106 may be compensated for horizontal crosstalk while pixel values 106 are in the grouped domain (e.g., while the images formed by pixel values 106 are foveated). In other words, a single compensation may be determined for groups of pixels in an image, saving power and computational requirements while compensating for the horizontal crosstalk.

Although FIGS. 7 and 8 have described correcting horizontal crosstalk for image data grouped in lines/rows, this is merely illustrative. Horizontal crosstalk may be compensated for in image data that is vertically and/or horizontally grouped.

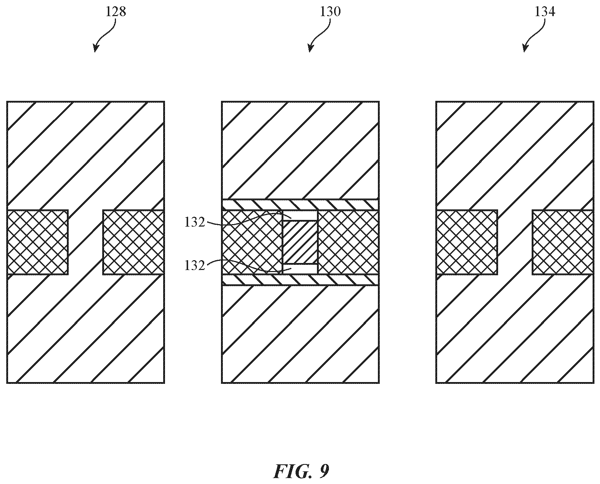

Instead of, or in addition to, compensating for horizontal crosstalk, multi-line horizontal cross talk (MLHXT) may also be compensated. An illustrative example is shown in FIG. 9.

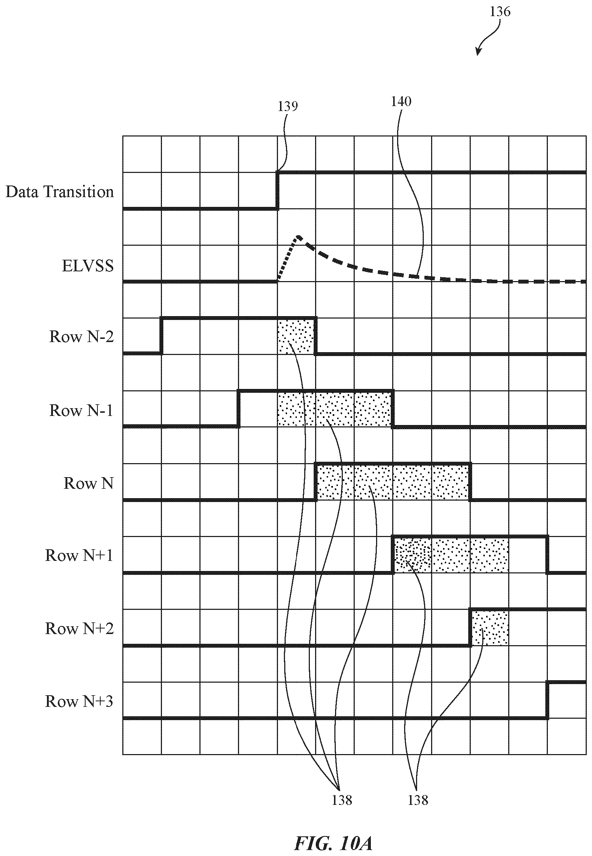

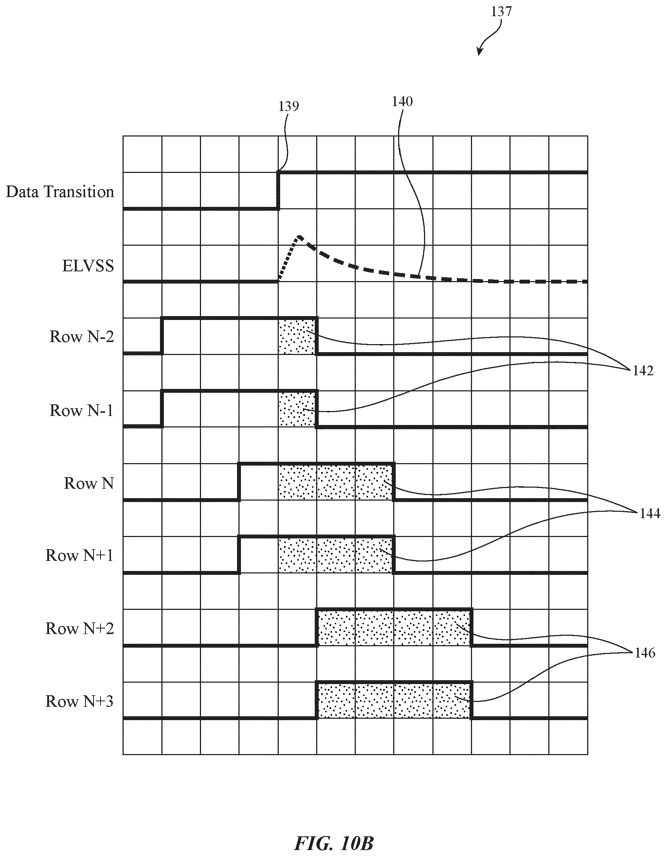

As shown in the illustrative example of FIG. 9, one or MLHXT artifacts 132 may be present in image 130 relative to source content 128 (e.g., the source of the image to displayed on display 24). MLHXT artifacts 132 may be caused by data lines and/or power lines that provide noise while image data is being read out. However, this cross talk may be compensated for to provide a final image 134 that corresponds to source content 128. An illustrative example of MLHXT cross talk impacting image data is shown in FIGS. 10A and 10B.

As shown in FIG. 10A, in timing diagram 136, rows N-2 through N+3 of image data may include portions 138 that are read out in the presence of ELVSS noise 140. In diagram 136, each row may correspond to one row in the native domain of the display panel (e.g., the full resolution group 52 of FIG. 3), so each portion 138 may be compensated individually.

In diagram 137 of FIG. 10B, rows N-2 and N-1 may have portions 142 that are read out in the presence of ELVSS noise 140, rows N and N+1 may have portions 144 that are read out in the presence of ELVSS noise 140, and rows N+2 and N+3 may have portions 146 that are read out in the presence of ELVSS noise 140. In diagram 137, the rows are in groups of two (e.g., in the half resolution group 54 of FIG. 3). Therefore, the groups of two rows may be compensated together (e.g., a single compensation may be applied to row N-2 and N-1) if the display is operated in a grouped mode.

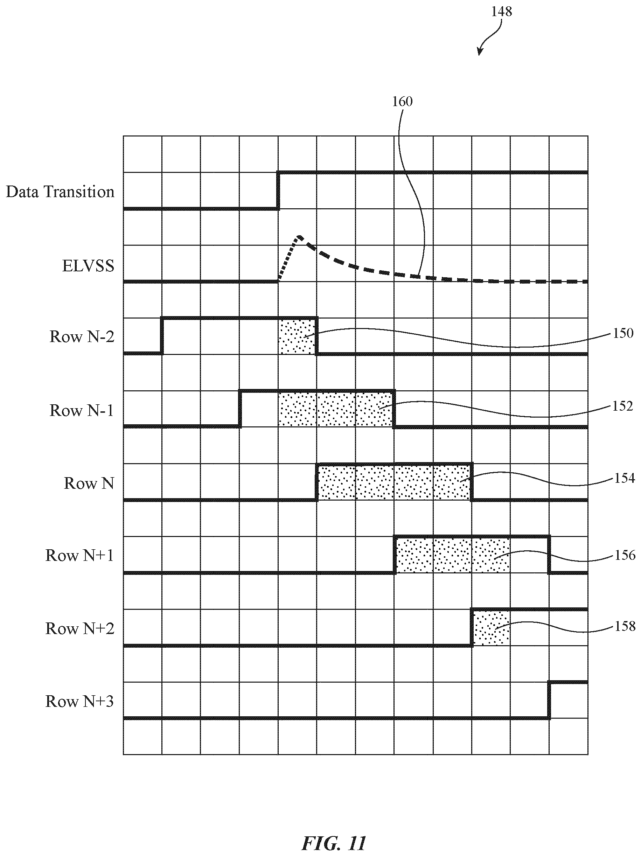

In some embodiments, however, the display may be operated in a native mode. As shown in the illustrative example of FIG. 11, row N-2 may have portion 150 that is read out in the presence of ELVSS noise 160, row N-1 may have portion 152 that is read out in the presence of ELVSS noise 160, row N may have portion 154 that is read out in the presence of ELVSS noise 160, row N+1 may have portion 156 that is read out in the presence of ELVSS noise 160, and row N+2 may have portion 158 that is read out in the presence of ELVSS noise 160. When one or more of rows N-2 through N+3 are ungrouped (e.g., are in different groupings of a foveated image or are in an unfoveated image), each row may be compensated separately. However, if one or more of rows N-2 through N+3 are grouped (e.g., are in the same grouping of a foveated image), the compensation for the grouped rows may be averaged. For example, rows N-2 and N-1 may be compensated with the same compensation that is determined as an average of the error in rows N-2 and N-1.

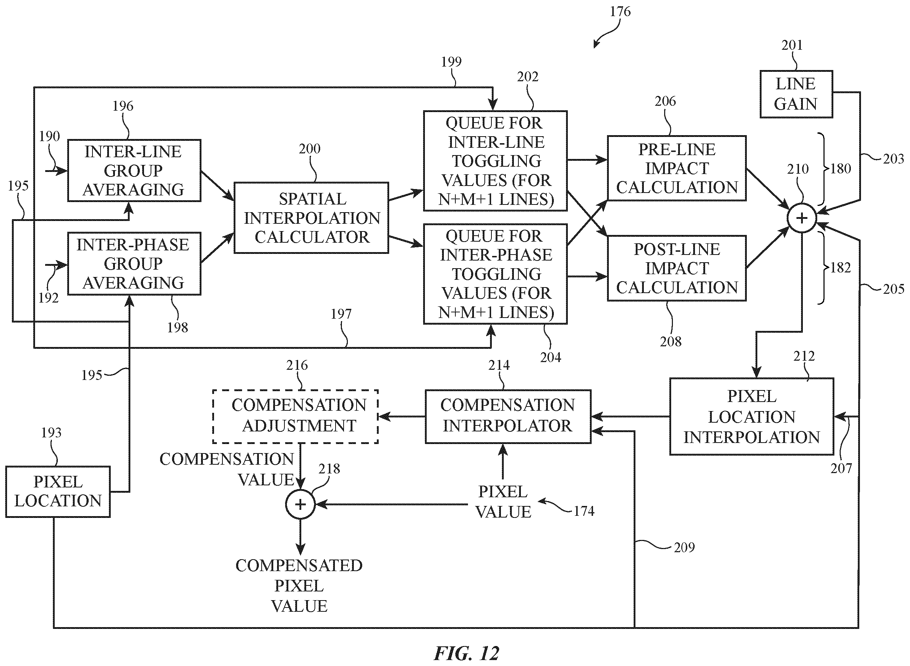

Regardless of whether the display panel is operated in a grouped mode or a native mode, a schematic diagram of an MLHXT compensation circuit is shown in FIG. 12.

In the example of FIG. 12, MLHXT compensation circuit 176 may include inter-line toggling calculation circuitry 180 having an inter-line group averaging circuit 196 that receives inter-line toggling pixel value difference values 190. Inter-line toggling pixel value difference values 190 may be determined by subtracting image data from a given row from the image data from a previous row. Inter-line group averaging circuit 196 may output average inter-line toggling pixel difference values that average inter-line toggling pixel value difference values within each group of each row. In particular, inter-line group averaging circuit 196 may use the location of the pixels in the native domain and/or in the grouped domain (given by output 195) from pixel location circuit 193 (e.g., pixel location circuit 193 may determine the location of the grouped image data in the native domain/space and/or in the grouped domain of the display panel) to weight the average based on the grouping region (e.g., whether the group is full resolution, half resolution, or quarter resolution as shown in FIG. 3). Accordingly, these average inter-line toggling pixel difference values may be referred to as group average (inter-line toggling difference) values.

Averaging circuit 196 may be coupled to and output the group average inter-line toggling difference values for each row to spatial interpolation calculator circuit 200. Group average inter-line toggling difference values may be indicative of how (e.g., a degree or amount) the inter-line toggling of each group impacts or affects neighboring pixels or pixel groups (e.g., a degree or amount with which the inter-line toggling of each group acts in the aggressor capacity). Spatial interpolation calculator circuit 200 may transform or convert the group average inter-line toggling difference values to corresponding group inter-line toggling impact values (e.g., each indicative of a degree or amount that pixel group is impacted or victimized by the inter-line toggling of pixel groups in the same row). Spatial interpolation calculator circuit 200 may perform a cross-correlation between the different group average inter-line toggling difference values for the pixel row (and based on the relative positions of the groups) to characterize (e.g., determine) the inter-line toggling impact on each group and obtain an inter-line toggling impact value for each group. Spatial interpolation calculator circuit 200 may sometimes be referred to as a spatial interpolation calculation circuit, a spatial interpolation calculator, a circuit, a cross-correlation circuit, a transformation circuit, or a conversion circuit.

Inter-line toggling calculation circuitry 180 may include a queue 202 (e.g., a first-in first-out (FIFO) storage circuit) coupled to and configured to receive inter-line toggling (impact) values from circuit 200. In particular, queue 202 (or generally a storage circuit) may store (e.g., hold) inter-line toggling impact values for groups in a given row, in N preceding rows, and in M succeeding rows (e.g., an inter-line toggling impact value for each of these groups). Queue 202 may store the grouped data, as well as pixel location information 199 from pixel location circuit 193. In particular, if the grouped data corresponds to two rows of pixels, queue 202 may store that information for when the grouped data is read out.

In the example of FIG. 12, inter-phase toggling calculation circuitry 182 may include an inter-phase group averaging circuit 198 that receives inter-phase toggling pixel value difference values 192. Inter-phase toggling pixel value difference values 192 may be determined by subtracting differences between groups over a given frame and a previous frame. Inter-phase group averaging circuit 198 may output average inter-phase toggling pixel difference values that average inter-phase toggling pixel value difference values 192 within each group of each row. In particular, inter-phase group averaging circuit 198 may use the location of the pixels in the native domain and/or in the grouped domain (given by output 195) from pixel location circuit 193 to weight the average based on the grouping region (e.g., whether the group is full resolution, half resolution, or quarter resolution as shown in FIG. 3). Accordingly, these average inter-phase toggling pixel difference values may be referred to as group average (inter-phase toggling difference) values.

Averaging circuit 198 may be coupled to and output the group average inter-phase toggling difference values for each row to circuit 200. Group average inter-phase toggling difference values may be indicative of how (e.g., a degree or amount) the inter-phase toggling of each group impacts or affects neighboring pixels or pixel groups (e.g., a degree or amount the inter-phase toggling of each group acts in the aggressor capacity). Circuit 200 may transform or convert the group average inter-phase toggling difference values to corresponding group inter-phase toggling impact values (e.g., each indicative of a degree or amount that pixel group is impacted or victimized by the inter-phase toggling of pixel groups in the same row). Circuit 200 may perform a cross-correlation between the different group average inter-phase toggling difference values for the pixel row (and based on the relative positions of the groups) to characterize (e.g., determine) the inter-phase toggling impact on each group and obtain an inter-phase toggling impact value for each group.

Inter-phase toggling calculation circuitry 182 may include a queue 204 (e.g., a first-in first-out (FIFO) storage circuit) coupled to and configured to receive inter-phase toggling (impact) values from circuit 200. In particular, queue 204 (or generally a storage circuit) may store (e.g., hold) inter-phase toggling impact values for groups in a given row, in N preceding rows, and in M succeeding rows (e.g., an inter-phase toggling impact value for each of these groups). Queue 204 may store the grouped data, as well as pixel location information 197 from pixel location circuit 193. In particular, if the grouped data corresponds to two rows of pixels, queue 204 may store that information for when the grouped data is read out.

In the illustrative example of FIG. 12, circuitry 180 and circuitry 182 may have separate group average circuits and storage circuits (e.g., queues) and may share circuit 200. If desired, separate circuits 200 may be provided for circuitry 180 and circuitry 182 and/or other circuits may be shared between circuitry 180 and circuitry 182. Alternatively, a single one of circuitry 180 or circuitry 182 may be used (rather than both circuitry 180 and 182).

Queues 202 and 204 may each be coupled to a pre-line impact calculation circuit 206 and a post-line impact calculation circuit 208. In particular, pre-line impact calculation circuit 206 may receive inter-line toggling impact values for preceding lines (e.g., N preceding rows) from queue 202 and may receive inter-phase toggling impact values for preceding lines (e.g., N preceding rows) from queue 204. Pre-line impact calculation circuit 206 may determine (e.g., calculate) the impact of the toggling of pixel values in these preceding lines on the impact values of the given row being compensated. As an example, pre-line impact calculation circuit 206 may include a combination of selection, multiply, and summation circuits to calculate impact values for the given row based on the inter-line toggling impact values and inter-phase toggling impact values for the preceding lines.

Post-line impact calculation circuit 208 may receive inter-line toggling impact values for succeeding lines (e.g., M succeeding rows) from queue 202 and may receive inter-phase toggling impact values for succeeding lines (e.g., M succeeding rows) from queue 204. Post-line impact calculation circuit 208 may determine (e.g., calculate) the impact of the toggling of pixel values in these succeeding lines on the impact values of the given row being compensated. As an example, post-line impact calculation circuit 208 may include a combination of selection, multiply, and summation circuits to calculate impact values for the given row based on the inter-line toggling impact values and inter-phase toggling impact values for the succeeding lines.

As appropriate, the inter-line toggling impact values and the inter-phase toggling impact values may be scaled or otherwise processed by circuits 206 and 208 and/or prior to being received by circuits 206 and 208.

The toggling impact values for the given row caused by toggling of pixel values in preceding lines output by circuit 206 and the impact values for the given row caused by toggling of pixel values in succeeding lines output by circuit 208 (and any other impact values such as the impact values for the given row caused by toggling of pixel values in the given row itself) may be combined at a summation circuit 210 coupled to circuits 206 and 208. Additionally, summation circuit 210 may use the location of the pixels in the native domain and/or in the grouped domain (location 205) from pixel location circuitry 193, as well as the gain for each line 203 from line gain circuitry 201. Line gain circuitry 201 may determine whether given lines in the image are grouped/foveated and the given resolution of those lines. In particular, if the lines are read out in a group and the display is scanned in a native mode, the impact value may be multiplied, summed, and averaged for the group. However, if the lines are read out in a group and the display is scanned in a group mode, the impact value may correspond to each group in a one to one fashion.

Accordingly, summation circuit 210 may provide a combined toggling impact value for each group of the given pixel row being compensated. The combined toggling impact values are indicative of a degree or amount of impact to the group caused by inter-line toggling and inter-phase toggling associated each group.

Summation circuit 210 may be coupled to and provide the per-group combined toggling impact values to pixel location interpolator 212 (e.g., an impact value interpolation circuit). Because the combined toggling impact values are provided on a per-pixel-group basis and pixel value compensation is performed on a per-pixel basis, pixel location interpolator 212 may interpolate a pixel-specific (per-pixel) impact value for a given pixel value based on the location of the pixel (to be loaded with the pixel value) in the row being compensated and based on the per-group combined toggling impact values for the row. In particular, pixel location interpolator 212 may use the location of the pixels in the native domain and/or in the grouped domain (location 207) from pixel location circuit 193. Pixel location interpolator 212 may be implemented using any suitable type of interpolation circuit (e.g., a linear interpolation circuit, a polynomial interpolation circuit, etc.)

Pixel interpolator 212 may be coupled to and provide the per-pixel impact value to compensation interpolator 214 (e.g., a compensation value interpolation circuit). Compensation interpolator 214 may be implemented using any suitable type of interpolation circuit (e.g., a linear interpolation circuit, a polynomial interpolation circuit, etc.). In particular, based on the received per-pixel impact value and the pixel value to be compensated, as well as the location of the pixels in the native domain and/or in the grouped domain (location 209) from pixel location circuit 193, compensation interpolator 214 may generate a compensation value for the pixel value. The compensation value provided by compensation interpolator 214 may appropriately adjust the pixel value to counteract the inter-line and inter-phase toggling crosstalk impacting the programming of the pixel value.

If desired, the compensation value output from compensation interpolator 214 may be further adjusted by additional downstream compensation adjustment circuit(s) 216. These compensation adjustment circuit(s) 216 may perform any combination of adjustments such as pixel array location-based adjustments (e.g., applying a weight or scaling factor depending on the array location of the pixel to be loaded with the pixel value), general tunable adjustments (e.g., controllable by system or user input), a compensation toggle adjustment (e.g., to nullify the compensation value based on determining that compensation should not applied to the given pixel value), etc.

Compensation circuit 176 may generally apply the resulting compensation value (e.g., the compensation value directly output from compensation interpolator 214 or after further processing by adjustment circuit(s) 216)) to the corresponding pixel value for which the compensation value is generated. In the example of FIG. 12, an adder circuit 218 in compensation circuit 176 may receive the pixel value (e.g., the same pixel value provided to compensator interpolator 214) and the compensation value output from compensator interpolator 214 (optionally via adjustment circuit(s) 216) and sum the values to generate the corresponding compensated pixel value. Compensated pixel value(s) may be programmed into corresponding pixels of display 24 (e.g., with or without additional downstream processing of the compensated pixel values) during respective phases on shared data lines and using corresponding gate lines. In this way, compensation circuit 176 may determine a compensation for MLHXT on grouped image data and apply that compensation to the grouped image data.

The components of compensation circuit 176 may be implemented in one or more integrated circuits such as microcontrollers, application-specific integrated circuits, or other types of processing circuitry with or without integrated memory, and memory or other data storage integrated circuits, may be implemented using discrete logic or other discrete components, may be implemented using one or more state machines, and/or any other suitable implementation).

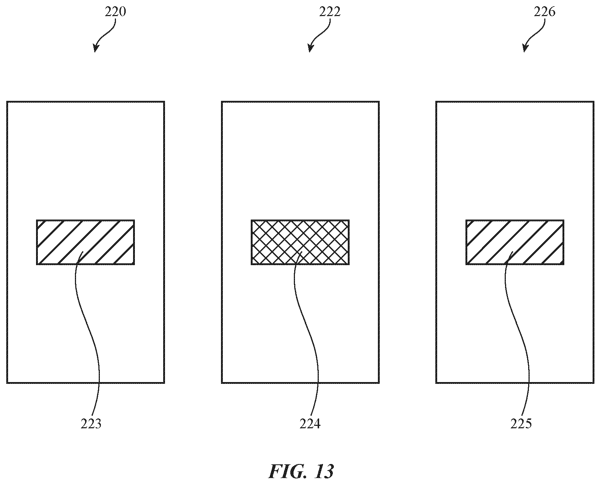

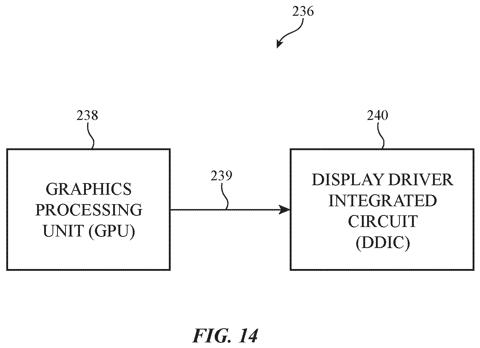

In some embodiments, it may be desirable to compensate for IR drop within an image on display 24. In particular, as shown in the illustrative example of FIG. 13, one or more IR drop artifact regions 224 may be present in image 222 relative to source content 220 (e.g., the source of the image to displayed on display 24). IR drop artifact regions may be caused by voltage drops through resistors in the display. However, IR drop may be compensated for to provide a final image 226 that corresponds to source content 220. An illustrative example of compensating for IR drop in grouped image data is shown in FIG. 14.

As shown in FIG. 14, display circuitry 236 (e.g., a part of control circuitry 12 of FIG. 1) may include graphics processing unit (GPU) 238 and display driver integrated circuit (DDIC) 240. GPU 238 may have full frame information for a given image while the given image is being rendered. During rendering, GPU 238 may sample a given number of pixels (e.g., a few pixels) of frame data in each IR drop area zone to provide a rough estimation regarding current differences between frames.

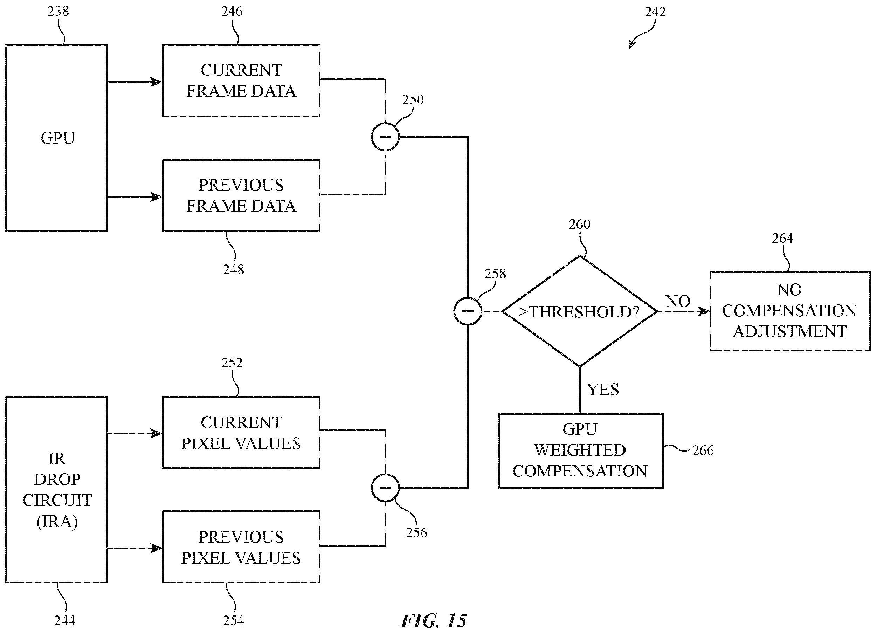

An IR drop block in DDIC 240 may receive the sampled frame data over connection 239 from GPU 238 before the current frame is read out to DDIC 240, allowing DDIC 240 to adjust the IR drop compensation weight based on the rough estimation. An illustrative IR drop compensation circuit that may be used for this process is shown in FIG. 15.

As shown in IR drop compensation circuit 242 of FIG. 14, GPU 238 may provide current 246 from the current frame and current 248 from the previous frame to display circuitry, such as DDIC 240 of FIG. 14. Current 246 may be subtracted from (e.g., compared to) current 248 using subtractor 250. Similarly, IR drop block (IRA) 244 may provide the pixel values 252 (e.g., average pixel level data) from the current frame (received from GPU 238 prior to reading out the current frame) and pixel values 254 from the previous frame. Pixel values 252 may be subtracted from (e.g., compared to) pixel values 254 using subtractor 256. The two differences may then be subtracted using subtractor 258. If the difference from subtractor 258 is greater than threshold 260, then GPU 238 may adjust the IR drop compensation at step 266 (e.g., to reduce the calculated difference). If the difference from subtractor 258 is less than threshold 260, then no adjustment is required at step 264, and the process may repeat. In this way, GPU 238 and IRA 244 may be used for IR drop compensation.

The IR drop may be compensated for image data with horizontal and/or vertical grouping. In particular, to compensate for IR drop, the generated current may be estimated. Because image data is grouped, the estimated generated current may be weighted based on the grouping of the image data. For example, for pixels in 2x regions (e.g., the pixels in groups 54 of FIG. 3), the estimated generated current may be weighted 2x, while pixels in 4x regions (e.g., the pixels in groups 56 of FIG. 3) may be weighted 4x.

Additionally, the location of the IR drop may be determined, as the location may be used to determine the level of compensation. In particular, the location may be determined by interpolating bilinearly in the native pixel domain. For example, for pixels in 2x regions (e.g., the pixels in groups 54 of FIG. 3), the estimated IR drop may be assumed to be located in the center of the two native pixel locations. For pixels in 4x regions (e.g., the pixels in groups 56 of FIG. 3), the estimated IR drop may be assumed to be located in the center of the four native pixel locations.

By weighting the estimated generated current for each group and interpolating in the native pixel domain to determine the location of the IR drop, the IR drop may be compensated in the grouped domain.

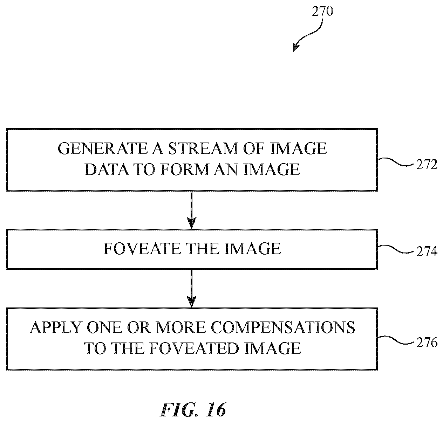

Although FIGS. 3-15 have described a number of compensations that may be applied to an image in grouped domain, these are merely illustrative. In general, images may be foveated or warped/grouped dynamically to optimize resolution or quality in regions of interest (e.g., gaze). The images may be compensated, such as for horizontal cross talk, multi-line horizontal cross talk, IR drop, uniformity, and/or other display aberrations in the grouped domain. In general, any of the compensations described in connection with FIGS. 3-15 (and/or any other suitable compensations) may be applied to image data in the group domain together or in any combination. An illustrative method of compensating foveated images in the foveated domain is shown in FIG. 16.

As shown in flowchart 270 of FIG. 16, at step 272, a stream of image data may be generated to form an image. The stream of image data may be generated by control circuitry in a device, such as control circuitry 12 (e.g., display driver circuitry 18) of FIG. 1).

At step 274, the image may be foveated. The image may be foveated based on a user's point of gaze (e.g., as shown in FIG. 3), the content to be displayed, and/or any other desired characteristics of the electronic device, the user, and/or the displayed content. The image may be foveated with different groups of the image having different resolutions based on one or more areas of interest in the image.

At step 276, one or more compensations may be applied to the foveated image. For example, a horizontal cross talk compensation circuit (e.g., circuit 104 of FIG. 8), a multi-line horizontal cross talk compensation circuit (e.g., circuit 176 of FIG. 12), an IR drop compensation circuit (e.g., circuit 242 of FIG. 15), and/or any other suitable/desirable compensation circuits may be used to compensate the foveated image while the image is in the foveated space (e.g., in the grouped domain).

In particular, to compensate the images in the grouped domain, a mapping may be performed between the grouped domain and a native domain of the display. The mapping may encode differences in compensation due to variable regions (e.g., multiple pixels) of the native domain being programmed by a single pixel value in the grouped domain.

Although some of the embodiments herein have described compensating image data grouped in lines, this is merely illustrative. In general, any suitable image data, such as image data that is vertically and/or horizontally grouped, may be compensated as in the group domain.

In accordance with an embodiment, a display includes an array of pixels configured to display images, display driver circuitry coupled to the array of pixels, where the display driver circuitry is configured to foveate the images displayed by the array of pixels by adjusting a first resolution of a first group of pixels of the array of pixels and a second resolution of a second group of pixels of the array of pixels, and a compensation circuit configured to apply compensations to the foveated images based on the first resolution of the first group of pixels and the second resolution of the second group of pixels.

In accordance with another embodiment, the compensation circuit is optionally configured to compensate for horizontal cross talk based on the first resolution and the second resolution.

In accordance with another embodiment, the compensation circuit optionally includes resolution-determination circuitry that is configured to determine the first resolution and the second resolution.

In accordance with another embodiment, the compensation circuit optionally further includes coordinate conversion circuitry that is configured to determine a location of the first group of pixels and the second group of pixels in the foveated images and in a native space.

In accordance with another embodiment, the compensation circuit is optionally configured to compensate for multi-line horizontal cross talk based on the first resolution and the second resolution.

In accordance with another embodiment, the compensation circuit optionally includes pixel location circuitry that is configured to determine a location of the first group of pixels and the second group of pixels in the foveated images and in a native domain, and an inter-line group averaging circuit that is configured to determine the first and second resolutions and to average differences between the pixels based on the first and second resolutions.

In accordance with another embodiment, the compensation circuit is optionally configured to compensate for IR drop based on the first resolution and the second resolution.

In accordance with another embodiment, the compensation circuit optionally includes a graphics processing unit (GPU) and IR drop circuitry, and the display optionally further includes a display driver integrated circuit (DDIC), where the DDIC is configured to receive current from the GPU and average pixel level data from the IR drop circuitry, to compare the frame data from a current frame and the frame data from data from a previous frame, and to compare the average pixel level data from the current frame and the average pixel level data from the previous frame.

In accordance with another embodiment, the GPU is optionally configured to compensate the first group of pixels and the second group of pixels in response to the DDIC determining that a different between the frame data and the average pixel level data across the current frame and the previous frame is greater than a threshold.

In accordance with another embodiment, the display optionally further includes a system-on-chip (SoC) and a frame buffer coupled to the SoC, where the SoC is configured to write image data generated by the array of pixels into the frame buffer with intra-frame pauses.

In accordance with another embodiment, the SoC is optionally configured to initiate the intra-frame pauses based on a look-up table.

In accordance with another embodiment, the SoC is optionally configured to initiate the intra-frame pauses in response to first signals from the frame buffer that the frame buffer is full.

In accordance with another embodiment, the SoC is optionally configured to resume writing the image data into the frame buffer in response to second signals from the frame buffer that there is available storage in the frame buffer.

In accordance with an embodiment, a method of displaying images using an array of pixels includes generating a stream of image data that forms an image, foveating the image into a foveated space in which a first group of pixels of the array of pixels has a first resolution and a second group of pixels of the array of pixels has a second resolution, and applying compensations to the image in the foveated space based on the first resolution of the first group of pixels and the second resolution of the second group of pixels.

In accordance with another embodiment, applying the compensations to the image in the foveated space optionally includes compensating for horizontal cross talk in the image based on the first resolution and the second resolution.

In accordance with another embodiment, applying the compensations to the image in the foveated space optionally includes compensating for multi-line horizontal cross talk in the image based on the first resolution and the second resolution.

In accordance with another embodiment, applying the compensations to the image in the foveated space optionally includes compensating for IR drop based on the first resolution and the second resolution.

In accordance with another embodiment, the method optionally further includes writing the stream of image data into a frame buffer with an intra-frame pause.

In accordance with an embodiment, an electronic device includes a sensor and a display that includes an array of pixels configured to display images, display driver circuitry coupled to the array of pixels, where the display driver circuitry is configured to foveate the images displayed by the array of pixels into a foveated space based on measurements from the sensor, and a compensation circuit configured to apply compensations to the images in the foveated space.

In accordance with another embodiment, the sensor is optionally a gaze tracker, the display driver circuitry is configured to foveate the images based on a gaze that is measured by the gaze sensor, the display driver circuitry is further configured to foveate images by adjusting a first resolution of a first group of pixels of the array of pixels and a second resolution of a second group of pixels of the array of pixels, and the compensation circuit is configured to apply the compensations based on the first resolution and the second resolution.

The foregoing is merely illustrative and various modifications can be made to the described embodiments. The foregoing embodiments may be implemented individually or in any combination.

Exemplary displays, methods, and electronic devices are set out in the following items.
1. A display, comprising:
   an array of pixels configured to display images;
   display driver circuitry coupled to the array of pixels, wherein the display driver circuitry is configured to foveate the images displayed by the array of pixels by adjusting a first resolution of a first group of pixels of the array of pixels and a second resolution of a second group of pixels of the array of pixels; and
   a compensation circuit configured to apply compensations to the foveated images based on the first resolution of the first group of pixels and the second resolution of the second group of pixels.
2. The display of item 1, wherein the compensation circuit is configured to compensate for horizontal cross talk based on the first resolution and the second resolution.
3. The display of item 2, wherein the compensation circuit comprises resolution-determination circuitry that is configured to determine the first resolution and the second resolution.
4. The display of item 2, wherein the compensation circuit further comprises coordinate conversion circuitry that is configured to determine a location of the first group of pixels and the second group of pixels in the foveated images and in a native space.
5. The display of item 1, wherein the compensation circuit is configured to compensate for multi-line horizontal cross talk based on the first resolution and the second resolution.
6. The display of item 5, wherein the compensation circuit comprises:
   pixel location circuitry that is configured to determine a location of the first group of pixels and the second group of pixels in the foveated images and in a native domain; and
   an inter-line group averaging circuit that is configured to determine the first and second resolutions and to average differences between the pixels based on the first and second resolutions.
7. The display of item 1, wherein the compensation circuit is configured to compensate for IR drop based on the first resolution and the second resolution.
8. The display of item 7, wherein the compensation circuit comprises a graphics processing unit (GPU) and IR drop circuitry, and the display further comprises:
   a display driver integrated circuit (DDIC), wherein the DDIC is configured to receive current from the GPU and average pixel level data from the IR drop circuitry, to compare the frame data from a current frame and the frame data from data from a previous frame, and to compare the average pixel level data from the current frame and the average pixel level data from the previous frame.
9. The display of item 8, wherein the GPU is configured to compensate the first group of pixels and the second group of pixels in response to the DDIC determining that a different between the frame data and the average pixel level data across the current frame and the previous frame is greater than a threshold.
10. The display of item 1, further comprising:
   a system-on-chip (SoC); and
   a frame buffer coupled to the SoC, wherein the SoC is configured to write image data generated by the array of pixels into the frame buffer with intra-frame pauses.
11. The display of item 10, wherein the SoC is configured to initiate the intra-frame pauses based on a look-up table.
12. The display of item 10, wherein the SoC is configured to initiate the intra-frame pauses in response to first signals from the frame buffer that the frame buffer is full.
13. The display of item 12, wherein the SoC is configured to resume writing the image data into the frame buffer in response to second signals from the frame buffer that there is available storage in the frame buffer.
14. A method of displaying images using an array of pixels, the method comprising:
   generating a stream of image data that forms an image;
   foveating the image into a foveated space in which a first group of pixels of the array of pixels has a first resolution and a second group of pixels of the array of pixels has a second resolution; and
   applying compensations to the image in the foveated space based on the first resolution of the first group of pixels and the second resolution of the second group of pixels.
15. The method of item 14, wherein applying the compensations to the image in the foveated space comprises compensating for horizontal cross talk in the image based on the first resolution and the second resolution.
16. The method of item 14, wherein applying the compensations to the image in the foveated space comprises compensating for multi-line horizontal cross talk in the image based on the first resolution and the second resolution.
17. The method of item 14, wherein applying the compensations to the image in the foveated space comprises compensating for IR drop based on the first resolution and the second resolution.
18. The method of item 14, further comprising:
   writing the stream of image data into a frame buffer with an intra-frame pause.
19. An electronic device, comprising:
   a sensor; and
   a display, comprising:
      an array of pixels configured to display images,
      display driver circuitry coupled to the array of pixels, wherein the display driver circuitry is configured to foveate the images displayed by the array of pixels into a foveated space based on measurements from the sensor, and
      a compensation circuit configured to apply compensations to the images in the foveated space.
20. The electronic device of item 19, wherein the sensor is a gaze tracker, the display driver circuitry is configured to foveate the images based on a gaze that is measured by the gaze sensor, the display driver circuitry is further configured to foveate images by adjusting a first resolution of a first group of pixels of the array of pixels and a second resolution of a second group of pixels of the array of pixels, and the compensation circuit is configured to apply the compensations based on the first resolution and the second resolution.
The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A display, comprising:
an array of pixels configured to display images;
display driver circuitry coupled to the array of pixels, wherein the display driver circuitry is configured to foveate the images displayed by the array of pixels by adjusting a first resolution of a first group of pixels of the array of pixels and a second resolution of a second group of pixels of the array of pixels; and
a compensation circuit configured to apply compensations to the foveated images based on the first resolution of the first group of pixels and the second resolution of the second group of pixels.

2. The display of claim 1, wherein the compensation circuit is configured to compensate for horizontal cross talk based on the first resolution and the second resolution.

3. The display of claim 2, wherein the compensation circuit comprises resolution-determination circuitry that is configured to determine the first resolution and the second resolution.

4. The display of claim 2, wherein the compensation circuit further comprises coordinate conversion circuitry that is configured to determine a location of the first group of pixels and the second group of pixels in the foveated images and in a native space.

5. The display of claim 1, wherein the compensation circuit is configured to compensate for multi-line horizontal cross talk based on the first resolution and the second resolution.

6. The display of claim 5, wherein the compensation circuit comprises:
pixel location circuitry that is configured to determine a location of the first group of pixels and the second group of pixels in the foveated images and in a native domain; and
an inter-line group averaging circuit that is configured to determine the first and second resolutions and to average differences between the pixels based on the first and second resolutions.

7. The display of claim 1, wherein the compensation circuit is configured to compensate for IR drop based on the first resolution and the second resolution.

8. The display of claim 7, wherein the compensation circuit comprises a graphics processing unit (GPU) and IR drop circuitry, and the display further comprises:
a display driver integrated circuit (DDIC), wherein the DDIC is configured to receive current from the GPU and average pixel level data from the IR drop circuitry, to compare the frame data from a current frame and the frame data from data from a previous frame, and to compare the average pixel level data from the current frame and the average pixel level data from the previous frame, and wherein the GPU is configured to compensate the first group of pixels and the second group of pixels in response to the DDIC determining that a different between the frame data and the average pixel level data across the current frame and the previous frame is greater than a threshold.

9. The display of claim 1, further comprising:
a system-on-chip (SoC); and
a frame buffer coupled to the SoC, wherein the SoC is configured to write image data generated by the array of pixels into the frame buffer with intra-frame pauses.

10. The display of claim 9, wherein the SoC is configured to initiate the intra-frame pauses based on a look-up table.

11. The display of claim 9, wherein the SoC is configured to initiate the intra-frame pauses in response to first signals from the frame buffer that the frame buffer is full, and , wherein the SoC is configured to resume writing the image data into the frame buffer in response to second signals from the frame buffer that there is available storage in the frame buffer.

12. A method of displaying images using an array of pixels, the method comprising:
generating a stream of image data that forms an image;
foveating the image into a foveated space in which a first group of pixels of the array of pixels has a first resolution and a second group of pixels of the array of pixels has a second resolution; and
applying compensations to the image in the foveated space based on the first resolution of the first group of pixels and the second resolution of the second group of pixels.

13. The method of claim 12, wherein applying the compensations to the image in the foveated space comprises compensating for horizontal cross talk in the image based on the first resolution and the second resolution.

14. The method of claim 12, wherein applying the compensations to the image in the foveated space comprises compensating for multi-line horizontal cross talk in the image based on the first resolution and the second resolution.

15. The method of claim 12, wherein applying the compensations to the image in the foveated space comprises compensating for **IR** drop based on the first resolution and the second resolution.
